# EUROPEAN PATENT APPLICATION

(11) **EP 4 242 942 A1**
(43) Date of publication of application: **13.09.2023**
(21) Application number: 22161274.0
(22) Date of filing: 10.03.2022
(51) Int. Cl.: G06Q 10/00, G06Q 10/10

(54) **SYSTEM AND METHOD FOR STORING AND SHARING REPAIR AND MAINTENANCE INFORMATION**

(71) Applicant: VOLVO TRUCK CORPORATION, 405 08 Göteborg (SE)
(72) Inventor: PETRIN, Leo, 439 73 Fjärås (SE)
(74) Representative: Valea AB

(57) **Abstract**

The invention relates to a method and system for storing and sharing repair and maintenance information (RMI) of a product (110). The system (100) comprises an embedded system (111) comprised in the product (110) configured to store the encrypted RMI. An encryption key (141) is provided by a provider of the product (110) to a customer (140) of the product (110). The system (100) further comprises a central system (120) configured to read, write and copy the RMI in the embedded system (111) via a communication network; a service device (131) of a service facility configured to download an application module (121), establish a wireless connection between the embedded system (111) and the service device, decrypt and display the RMI received from the embedded system (111) when the encryption key (141) is provided to the service device (131) and when the product (110) is in physical proximity to the service facility (130). The encryption key (141) is provided to the service facility (130) by the customer (140) of the product (110).

## Description

### TECHNICAL FIELD

The invention relates to a method and system for storing and sharing repair and maintenance information (RMI) of a product. In particular, the invention relates to provision of RMI to service providers.

The invention can be applied in any products such as heavy-duty vehicles, trucks, buses, cars, superstructures, construction equipment as well as marine vessels etc. Although the invention will be described with respect to a vehicle, the invention is not restricted to this particular vehicle, but may also be used in other products and equipment.

### BACKGROUND

Original equipment manufacturers (OEMs) including various vehicle brands make Repair & Maintenance information (RMI) available through Web portals on the internet, charge a pre-defined fee to any customers or independent workshops that want to use the RMI. The portal content can be copied and distributed by 3rd parties on the internet. The customers currently don't own the RMI for their products, e.g., cars, trucks etc., apart from what is available in a service manual of the product.

US2019260580A1 describes a system and method for controlling access to encrypted vehicular data. The system described in this document employs a hierarchical access control method that allows select encrypted vehicular data stored in a cloud server to be accessed by an authorized user, e.g. a service provider, in a hierarchical manner whereby the authorized user is then able to decrypt the select encrypted data and all child data associated with the select encrypted data.

### SUMMARY

An object of the invention is to provide an improved system and method for storing and sharing repair and maintenance information (RMI) of a product.

According to a first aspect of the invention, the object is achieved by a method for storing and sharing RMI of a product according to claim 1. The method comprises storing the RMI in an embedded system comprised in the product, wherein the RMI is encrypted; providing by a provider of the product, an encryption key to a customer of the product; providing by the customer of the product, the encryption key to a service facility; downloading by a service device of the service facility, an application module; establishing a wireless connection between the embedded system and the service device and decrypting and displaying by the application module, the RMI received from the embedded system in the service device when the encryption key is provided to the service device and when the product is in physical proximity to the service facility.

By storing the encrypted RMI in an embedded system comprised in the product, the RMI becomes a part of the purchased or leased product and is made available to customers. Customers receive an encryption key which is unique to each product and can share the encryption key with 3rd party service facilities if they wish to have their products maintained by them. Service facilities can download an application module under a fee. The RMI content stored in the embedded system can be displayed by the application module in a service device of the service facility by entering the encryption key and when the product is in physical proximity to the service facility. In this way, the customer of a product has the control over the RMI preventing the RMI to be copied and used in an uncontrolled manner. The RMI is decentralized and encrypted, hence it is difficult to hack and distribute the RMI in large scale.

According to one embodiment, the method may further comprise keeping a copy of the encryption key in the central system for decrypting the RMI, re-encrypting the RMI and creating a new encryption key if the customer requires. That is a secondary key, i.e. the copy of the primary encryption key, is made available to the central system and the central system is able to create a new key if the primary key is lost. This will increase the security and convenience for customers.

According to one embodiment, the method may further comprise updating by the application module in the service device, the RMI after servicing and/or repairing has been performed for the product and storing the updated RMI in the embedded system. In this way, the RMI content in the product is always up to date.

According to one embodiment, the method may further comprise communicating and updating the RMI between the embedded system comprised in the product and the central system via a wireless communication system. The central system is able to read, write and mirror the RMI data in the product. The RMI data may be mirrored into the central systems in a two-way encrypted communication. This will keep the RMI data updated and avoid any unauthorized tampering of the product, and at the same time this will secure product compliance over the time as the RMI may be subject of changes, depending on the market and advances in the legislation.

According to a second aspect of the invention, the object is achieved by a system for storing and sharing RMI of a product according to claim 6. The system comprises an embedded system comprised in the product configured to store the RMI. The RMI is encrypted and an encryption key is provided by a provider of the product to a customer of the product. The system further comprises a central system configured to read, write and copy the RMI in the embedded system via a wireless communication network. The system further comprises a service device of a service facility configured to download an application module, establish a wireless connection between the embedded system and the service device, decrypt and display the RMI received from the embedded system when the encryption key is provided to the service device and when the product is in physical proximity to the service facility. The encryption key is provided to the service facility by the customer of the product.

According to one embodiment, the central system may be further configured to re-encrypt the RMI and create a new key if the customer requires. That is a secondary key, e.g. a copy of the primary encryption is available to the central system for the purpose of decrypting the RMI data in the central system and being able of creating a new key if the primary key is lost. Hereby an improvement of the security and convenience is achieved for customers.

According to a further embodiment, the central system may be further configured to update the RMI in the embedded system. Advantages of this embodiment include keeping the RMI data updated, avoiding any unauthorized tampering of the product and securing product compliance over the time.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a system overview in which embodiments for storing and sharing RMI of a product is implemented; and
Fig. 2 is a flow chart of a method for storing and sharing RMI of a product.

### DETAILED DESCRIPTION OF EXAMPLE EMBODIMENTS OF THE INVENTION

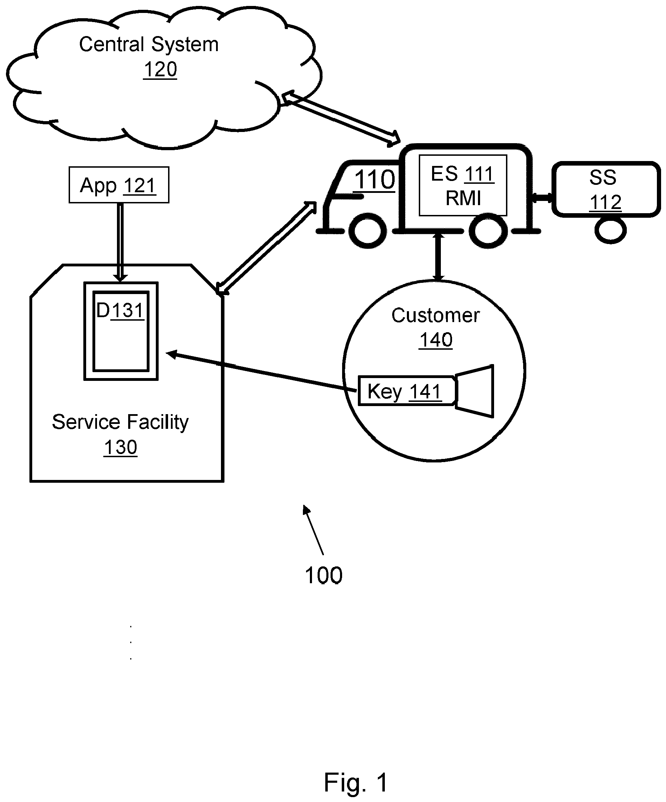

**FIG. 1** shows a system **100** according to embodiments herein for storing and sharing RMI of a product or equipment. The system 100 comprises an embedded system **ES 111** comprised in a product **110,** e.g. a vehicle as shown. The embedded system 111 is configured to store the encrypted RMI. When the product 110 is purchased or leased by a customer **140**, an encryption key **Key 141** is provided to the customer 140 by a provider of the product. The encryption key 141 is unique to each product and may be a code delivered or provided to the customer 140 by any suitable way in a secure manner. Hence, the customer 140 owns the RMI which is a part of the purchased or leased product 110.

Customers can share the encryption key 141 with 3rd party service facilities if they wish to have their product or equipment maintained by them. Service facilities may download an application module under a fee. The application module requires access to a connection to connect to the product. The application module also requires a unique encryption key that is owned by the customer. If the key is correctly entered, the RMI content stored in the embedded system 111 is displayed by the application module and when the product or equipment is in physical proximity to the service facilities. In this way, the customer 140 has the control over the RMI. Further, the RMI is decentralized and encrypted, hence it is difficult to hack and distribute the RMI in large scale.

The system 100 further comprises a central system **120** configured to read, write and copy the RMI in the embedded system 111 via a wireless communication network. The central system 120 may store information and databases for all products or a group of similar type of products produced by an OEM. The central system 120 may also store software consisting of database and modules that are combined to particularly serve the unique needs of a large organizations regarding the automation of corporate-wide business system and its functions. The central system 120 may be a cloud server or a local server. The local server may be installed and runs on computers on the premises of the person or organization using the software and databases. The cloud server may be at a remote facility such as a server farm.

The system 100 further comprises a service device **D131** of a service facility **130.** The service device 131 is configured to download an application module **APP 121** as described above for decrypting and displaying the RMI on the service device 131. The application module 121 is a piece of software that can be downloaded by customers, 3rd party workshops and authorized product dealers in some main platforms, such as Windows, iOS, Android, MacOS. The application module 121 may be made available by the central system 120 in application stores for several platforms and downloaded by service facilities under a fee. The service device 131 is configured to establish a wireless connection between the embedded system 111 and the service device D131, decrypt and display the RMI received from the embedded system 130 when the encryption key 141 is provided to the service device D131 and when the product is in physical proximity to the service facility 130. The encryption key 141 may be provided to the service facility 130 by the customer 140 of the product 110 in any suitable and secure way.

The central system 120 and the embedded system 111, the service device 131 and the embedded system 111 are connected and communicate to each other through the Internet or wireless communication networks such as, but are not limited to, cellular communication networks, satellite communication networks, telecommunication networks, or Wide Area Networks (WAN). In addition to the above, the embedded system 111 is also configured to communicate directly with the service device 131 via a short-range radio frequency communication network when the product 110 is brought into close physical proximity with the service facility 130 and this close physical proximity wireless communications may take place through wireless communication means such as, but not limited to, Wireless-Fidelity (Wi-Fi), Bluetooth, or Near Field Communication (NFC).

The central system 120, the service device 131 and the embedded system 111 each may comprise, but is not limited to, a communication module provided within any device that is able to carry out wireless communication and computing functions such as a smart phone, a tablet computer, a mobile computer, a netbook, a wearable electronic device etc. For example, the service device 131 may be any electronic device belonging to an approved third party service provider such as a repair shop mechanic's tablet or a smart mobile device. The communication module for the embedded system 111 may be a mobile module provided within any electronic device belonging to an owner or an authorized user of the product 110, e.g. a smart mobile device. The embedded system 111 may also use a telematics device comprised in the vehicle 110 for wireless communication. The telematics device collects Global Positioning System (GPS) tracking data and a range of vehicle-specific information and sends it to the central system 120.

A set of available RMI stored in the product 110 make it possible to diagnostic and repair that specific unit, following the legal demands on the specific market. According to some embodiments herein, the product 110 is a vehicle as shown in Fig.1. Then the RMI may comprise any one or any combination of the following information:
a) Repair instructions;
b) Bill of material and updates;
c) Vehicle service records;
d) Vehicle specification and variants;
e) Component information, such as serial numbers required by law;
f) Diagnostics status such as on-board diagnostics (OBD) data and basic fault tracing for those. OBD systems give the vehicle owner or repair technician access to the status of the various vehicle sub-systems. The amount of diagnostic information available via OBD has varied widely depends on versions of on-board vehicle computers;
g) Latest software version;
h) Data modules related to one or more superstructures. Additional data modules related to one or more superstructures may be stored together with the RMI of the vehicle in the embedded system 111 depending on partnership and agreement with the superstructure providers. Fig. 1 shows an example superstructure **SS 112** e.g. a trailer associated to the vehicle 110.

According to one embodiment, the central system 120 may be further configured to re-encrypt the RMI and create a new key if the customer 140 requires. That is a secondary key, e.g. a copy of the primary encryption key 141, is made available at the central system 120 for the purpose of decrypting the RMI data in the central system 120 and being able to create a new key if the primary key 141 is lost.

According to one embodiment, the central system 120 may be further configured to update the RMI in the embedded system 111. The above listed RMI data is mirrored into the central system 120 in a two-way encrypted communication through the Internet or wireless communication networks. The encrypted RMI data may be communicated via telematics to the central system 120. This will keep the RMI data updated and avoid any unauthorized tampering of the product, and at the same time this will secure product compliance over the time as the RMI may be subject of changes, depending on the market and advances in the legislation.

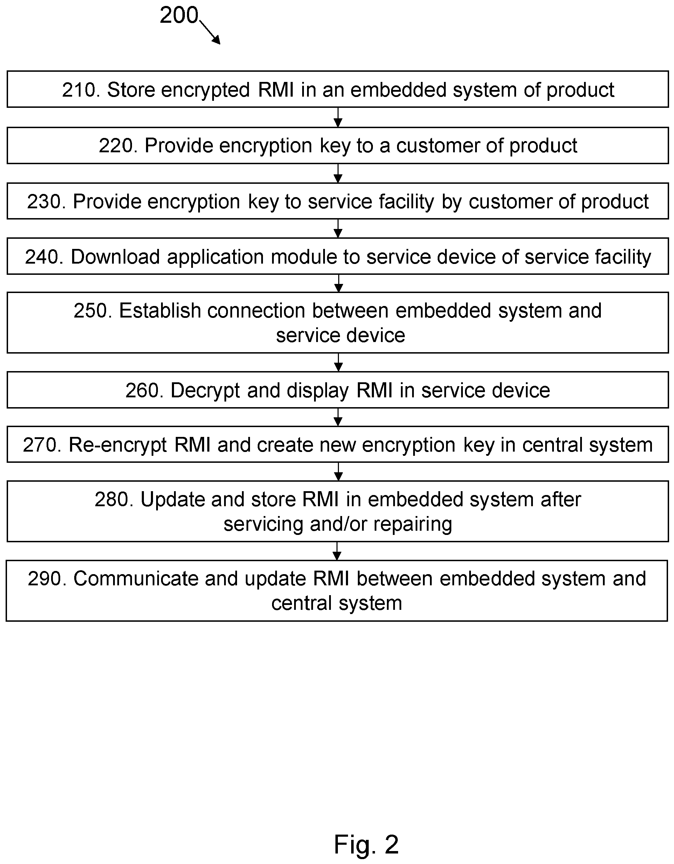

A method for storing and sharing RMI of a product or equipment will be described in detail with reference to **Fig.2****.** The method comprises the following actions which may be performed in any suitable order.

### Action 210

Storing encrypted RMI in an embedded system 111 comprised in a product 110. The RMI may be stored as a database module or an application module together with other software codes configured and stored in the embedded system 111 for operating and controlling the product 110. The RMI may be encrypted using any kinds of encryption technologies existing today and the encryption technology used to encrypt the RMI may also be subject to updates over the time.

### Action 220

Providing by a provider of the product 110, an encryption key 141 to a customer 140 of the product 110. As described above, when the product 110 is purchased or leased by a customer, the encryption key 141 is provided to the customer 140 by a provider of the product 110 by any suitable secured ways. The encryption key 141 is unique and is only known by the customer 140.

### Action 230

Providing by the customer 140 of the product 110, the encryption key 141 to a service facility 130. When the customer 140 wishes to have the product 110 maintained by a 3rd party service facility, e.g. the service facility 130, the customer 140 can share the encryption key 141 with the 3rd party service facility.

### Action 240

Downloading by a service device 131 of the service facility 130, an application module 121. The application module 121 may be made available in application stores for several platforms and downloaded by service facilities under a fee. The application module 121 may be subject of charges and/or target of product advertisements on repair and maintenance related offers.

### Action 250

Establishing by the application module 121 in the service device 131, a wireless connection between the embedded system 111 and the service device 131 of the service facility 130.

### Action 260

Decrypting and displaying by the service device 131, the RMI received from the embedded system 111 when the encryption key 141 is provided to the service device 131 and when the product 110 is in physical proximity to the service facility 130.

According to some embodiments herein, the method may further comprise the following actions:

### Action 270

Re-encrypting the RMI and creating a new encryption key if the customer requires. A copy of the encryption key 141 is kept in the central system 120 for decrypting the RMI data in the central system 120 and creating a new key if the primary key 141 is lost.

### Action 280

Updating by the application module in the service device 131, the RMI after servicing and/or repairing has been performed for the product and storing the updated RMI in the embedded system 111. The service records, e.g. the information on which component has been replaced, the information on new components, updated software version, updated bill of materials etc. are stored in the embedded system 111 after each servicing and/or repairing has been performed. The communication between the service device 131 and the embedded system 111 may be carried out via a wireless communication network such as, but not limited to, a cellular communication network, a satellite communication network or via a short-range radio frequency communication network such as, but not limited to, Wi-Fi, Bluetooth, or NFC when the product 110 is brought into close physical proximity with the service facility 130.

### Action 290

Communicating and updating the RMI between the embedded system 111 comprised in the product 110 and the central system 120 via a wireless communication system such as cellular communication networks, satellite communication networks or the Internet. The central system 120 is able to read, write and mirror the RMI data on-board of the product 110. The RMI data may be mirrored into the central system 120 in a two-way encrypted communication. This will keep the RMI data updated and avoid any unauthorized tampering of the product, and at the same time this will secure product compliance over the time as the RMI may be subject of changes, depending on the market and advances in the legislation.

To summarize, according to embodiments herein, the RMI is encrypted and stored in an embedded system 111 comprised in a product 110, thus the RMI becomes a part of the purchased or leased product and is made available to customers and owed by customers. Customers receive a unique encryption key 141 and can share the encryption key 141 with 3rd party service facilities if they wish to have their products maintained by them. Service facilities can download an application module 121 under a fee. The RMI content stored in the embedded software 111 can be displayed by the application module in a service device 131 of a service facility 130 by entering the encryption key 141 and when the product 110 is in physical proximity to the service facility 130. In this way, the customer 140 of a product 110 has the control over the RMI which can prevent the RMI to be copied and used in an uncontrolled manner. The RMI is thus decentralized and encrypted, hence it is difficult to hack and distribute the RMI in large scale. Further, by communicating and updating the RMI between the embedded system 111, the central system 120 and the service device 131 in a two-way encrypted communication, the RMI content in the product can be updated timely. This will secure product compliance over the time and avoid any unauthorized tampering of the product.

It is to be understood that the present invention is not limited to the embodiments described above and illustrated in the drawings; rather, the skilled person will recognize that many changes and modifications may be made within the scope of the appended claims.

## Claims

1. A method (200) for storing and sharing repair and maintenance information, RMI, of a product (110), the method comprising:
storing (210) the RMI in an embedded system (111) comprised in the product (110), wherein the RMI is encrypted;
providing (220) by a provider of the product, an encryption key (141) to a customer (140) of the product (110);
providing (230) by the customer of the product, the encryption key (141) to a service facility (130);
downloading (240) by a service device (131) of the service facility (130), an application module (121);
establishing (250) a wireless connection between the embedded system (111) and the service device (131);
decrypting and displaying (260) by the application module (121), the RMI received from the embedded system (111) in the service device (131) when the encryption key (141) is provided to the service device and when the product (110) is in physical proximity to the service facility (130).

2. The method according to claim 1, wherein the product is a vehicle, and the RMI comprises any one or any combination of the following information:
i) Repair instructions;
j) Bill of material and updates;
k) Vehicle service records;
I) Vehicle specification and variants;
m) Component information;
n) Diagnostics status such as on-board diagnostics, OBD, data and basic fault tracing for those;
o) Latest software version;
p) Data module related to one or more superstructures.

3. The method according to any one of claims 1-2, further comprising re-encrypting the RMI and creating (270) a new encryption key if the customer requires.

4. The method according to any one of claims 1-3, further comprising updating (280) by the application module (121) in the service device (131), the RMI after servicing and/or repairing has been performed for the product and storing the updated RMI in the embedded system (111).

5. The method according to any one of claims 1-4, further comprising communicating and updating (290) the RMI between the embedded system comprised in the product and the central system (120) via a communication system.

6. A system (100) for storing and sharing repair and maintenance information, RMI, of a product (110), the system (100) comprising:
an embedded system (111) comprised in the product (110) configured to store the RMI, wherein the RMI is encrypted and an encryption key (141) is provided by a provider of the product (110) to a customer (140) of the product (110);
a central system (120) configured to read, write and copy the RMI in the embedded system (111) via a communication network;
a service device (131) of a service facility configured to download an application module (121), establish a wireless connection between the embedded system (111) and the service device, decrypt and display the RMI received from the embedded system (111) when the encryption key (141) is provided to the service device (131) and when the product (110) is in physical proximity to the service facility (130), wherein the encryption key (141) is provided to the service facility (130) by the customer (140) of the product (110).

7. The system (100) according to claim 6, wherein the central system (120) is further configured to re-encrypt the RMI and create a new key if the customer requires.

8. The system (100) according to any one of claims 6-7, wherein the central system (120) is further configured to update the RMI in the embedded system (111).

9. The system (100) according to any one of claims 6-8, wherein the product (110) is a vehicle, and the RMI comprises any one or any combination of the following information:
a) Repair instructions;
b) Bill of material and updates;
c) Vehicle service records;
d) Vehicle specification and variants;
e) Component information;
f) Diagnostics status such as on-board diagnostics, OBD, data and basic fault tracing for those;
g) Latest software version;
h) Data module related to one or more superstructures.

10. The system (100) according to any one of claims 6-9, wherein the wireless communication network is a cellular communication network or a short-range radio frequency communication network.

11. The system (100) according to any one of claims 6-10, wherein the central system (120) is a cloud server or a local server.

12. A vehicle (110) comprising an embedded system (111) for storing encrypted repair and maintenance information, RMI, of the vehicle (110), wherein the embedded system (111) is configured to store the encrypted RMI and the embedded system (111) comprises a communication module configured to communicate the RMI with a central system (120) and a service device (131) of a service facility (130) via a wireless communication system.

## Amended claims

### Amended claims in accordance with Rule 137(2) EPC.

1. An embedded system (111) comprised in a product (110), wherein the embedded system (111) is configured to:
store encrypted repair and maintenance information, RMI, of the product (110);
establish a wireless connection to a service device (131) when the product (110) is in physical proximity to the service facility (130);
send the encrypted RMI to the service device (131); and
store undated RMI received from the service device (131) after servicing and/or repairing has been performed by the service device (131).

2. The embedded system (111) according to claim 1, wherein the product (110) is a vehicle, and the RMI comprises any one or any combination of the following information:
a) Repair instructions;
b) Bill of material and updates;
c) Vehicle service records;
d) Vehicle specification and variants;
e) Component information;
f) Latest software version;
g) Data module related to one or more superstructures.

3. A method (200) performed in an embedded system (111) comprised in a product (110) for storing and sharing repair and maintenance information, RMI, of the product (110), the method comprising:
storing encrypted repair and maintenance information, RMI, of the product (110) in the embedded system (111);
establishing a wireless connection to a service device (131) when the product (110) is in physical proximity to the service facility (130);
sending the encrypted RMI to the service device (131); and
storing undated RMI received from the service device (131) after servicing and/or repairing has been performed by the service device (131).

4. The method according to claim 3, wherein the product (110) is a vehicle, and the RMI comprises any one or any combination of the following information:
a) Repair instructions;
b) Bill of material and updates;
c) Vehicle service records;
d) Vehicle specification and variants;
e) Component information;
f) Latest software version;
g) Data module related to one or more superstructures.

5. A method (200) for storing and sharing repair and maintenance information, RMI, of a product (110), the method comprising:
storing (210) the RMI in an embedded system (111) comprised in the product (110), wherein the RMI is encrypted;
providing (220) by a provider of the product, an encryption key (141) to a customer (140) of the product (110);
providing (230) by the customer of the product, the encryption key (141) to a service facility (130);
downloading (240) by a service device (131) of the service facility (130), an application module (121);
establishing (250) a wireless connection between the embedded system (111) and the service device (131);
decrypting and displaying (260) by the application module (121), the RMI received from the embedded system (111) in the service device (131) when the encryption key (141) is provided to the service device and when the product (110) is in physical proximity to the service facility (130); and
updating (280) by the application module (121) in the service device (131), the RMI after servicing and/or repairing has been performed for the product and storing the updated RMI in the embedded system (111).

6. The method according to claim 5, wherein the product is a vehicle, and the RMI comprises any one or any combination of the following information:
a) Repair instructions;
b) Bill of material and updates;
c) Vehicle service records;
d) Vehicle specification and variants;
e) Component information;
f) Latest software version;
g) Data module related to one or more superstructures.

7. The method according to any one of claims 5-6, further comprising re-encrypting the RMI and creating (270) a new encryption key if the customer requires.

8. The method according to any one of claims 5-7, further comprising communicating and updating (290) the RMI between the embedded system comprised in the product and the central system (120) via a communication system.

9. A system (100) for storing and sharing repair and maintenance information, RMI, of a product (110), the system (100) comprising:
an embedded system (111) comprised in the product (110) configured to store the RMI, wherein the RMI is encrypted and an encryption key (141) is provided by a provider of the product (110) to a customer (140) of the product (110);
a central system (120) configured to read, write and copy the RMI in the embedded system (111) via a communication network;
a service device (131) of a service facility configured to download an application module (121), establish a wireless connection between the embedded system (111) and the service device, decrypt and display the RMI received from the embedded system (111) when the encryption key (141) is provided to the service device (131) and when the product (110) is in physical proximity to the service facility (130), update by the application module (121) in the service device (131), the RMI after servicing and/or repairing has been performed for the product and store the updated RMI in the embedded system (111), wherein the encryption key (141) is provided to the service facility (130) by the customer (140) of the product (110).

10. The system (100) according to claim 9, wherein the central system (120) is further configured to re-encrypt the RMI and create a new key if the customer requires.

11. The system (100) according to any one of claims 9-10, wherein the central system (120) is further configured to update the RMI in the embedded system (111).

12. The system (100) according to any one of claims 9-11, wherein the product (110) is a vehicle, and the RMI comprises any one or any combination of the following information:
a) Repair instructions;
b) Bill of material and updates;
c) Vehicle service records;
d) Vehicle specification and variants;
e) Component information;
f) Latest software version;
g) Data module related to one or more superstructures.

13. The system (100) according to any one of claims 9-12, wherein the wireless communication network is a cellular communication network or a short-range radio frequency communication network.

14. The system (100) according to any one of claims 9-13, wherein the central system (120) is a cloud server or a local server.

15. A vehicle (110) comprising an embedded system (111) according to any one of claims 1-2 for storing encrypted repair and maintenance information, RMI, of the vehicle (110), wherein the embedded system (111) comprises a communication module configured to communicate the RMI with a central system (120) and a service device (131) of a service facility (130) via a wireless communication system.
